(19) Europäisches Patentamt
European Patent Office
Office européen des brevets

(11) Veröffentlichungsnummer: **0 285 966**
**A2**

(12) **EUROPÄISCHE PATENTANMELDUNG**

(21) Anmeldenummer: **88105024.9**

(22) Anmeldetag: **29.03.88**

(51) Int. Cl.[4]: **C08L 71/04 , C08L 55/02 , C08L 51/06 , C08L 33/08 , C08L 25/00**

(30) Priorität: **07.04.87 DE 3711685**

(43) Veröffentlichungstag der Anmeldung: **12.10.88 Patentblatt 88/41**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Seiler, Erhard, Dr.**
**Erpolzheimer Strasse 1**
**D-6700 Ludwigshafen(DE)**
Erfinder: **Boehlke, Klaus, Dr.**
**Gerhart-Hauptmann-Strasse 53**
**D-6717 Hessheim(DE)**
Erfinder: **Gausepohl, Hermann, Dr.**
**Neuweg 10**
**D-6704 Mutterstadt(DE)**
Erfinder: **Ostermayer, Bertram, Dr.**
**Pfaffenpfad 14**
**D-6701 Roedersheim-Gronau(DE)**

(54) **Thermoplastische Formmassen auf Basis von Polyphenylenether.**

(57) Thermoplastische Formmassen auf Basis von Polyphenylenether, enthaltend als wesentliche Komponenten

A) 3 bis 97 Gew.-Teile, bezogen auf die Summe der Komponenten A und B, eines modifizierten Polyphenylenethers, hergestellt aus

$a_1$) 70 bis 99,95 Gew.-%, bezogen auf A, eines Polymeranteils, der mindestens 30 Gew.-%, bezogen auf $a_1$, Polyphenylenether und höchstens 70 Gew.-%, bezogen auf $a_1$, eines vinylaromatischen Polymeren enthält,

$a_2$) 0,05 bis 10 Gew.-%, bezogen auf A,

$a_{21}$) eines amidgruppenhaltigen Monomeren mit einer polymerisierbaren Doppelbindung,

$a_{22}$) eines lactamgruppenhaltigen Monomeren mit einer polymerisierbaren Doppelbindung und/oder

$a_{23}$) einer $\alpha,\beta$-ungesättigten Dicarbonylverbindung und

$a_3$) 0 bis 20 Gew.-%, bezogen auf A, eines weiteren nicht vinylaromatischen Comonomeren, das unter den Herstellungsbedingungen mit $a_1$ reagieren kann, und

B) 3 bis 97 Gew.-Teile, bezogen auf die Summe der Komponenten A und B, eines thermoplastischen Copolymerisates, hergestellt in der Schmelze aus

$b_1$) 80 bis 99,95 Gew.%, bezogen auf B, eines acryl-und phenylgruppenhaltigen Basispolymeren und

EP 0 285 966 A2

$b_2$) 0,05 bis 20 Gew.%, bezogen auf B, mindestens eines ethylenisch ungesättigten Monomeren mit einer Epoxid-und/oder Hydroxylgruppe oder eines Gemisches dieser Monomeren, wobei die Summe der Komponenten aus A und B 100 Gew.-Teile ergibt, und deren Herstellung.

## Thermoplastische Formmassen auf Basis von Polyphenylenether

Die Erfindung betrifft thermoplastische Formmassen auf Basis von Polyphenylenether, enthaltend als wesentliche Komponenten

A) 3 bis 97 Gew.-Teile, bezogen auf die Summe der Komponenten A und B, eines modifizierten Polyphenylenethers, hergestellt aus

$a_1$) 70 bis 99,95 Gew.-%, bezogen auf A, eines Polymeranteils, der mindestens 30 Gew.-%, bezogen auf $a_1$, Polyphenylenether und höchstens 70 Gew.-%, bezogen auf $a_1$, eines vinylaromatischen Polymeren enthält,

$a_2$) 0,05 bis 10 Gew.-%, bezogen auf A,

$a_{21}$) eines amidgruppenhaltigen Monomeren mit einer polymerisierbaren Doppelbindung,

$a_{22}$) eines lactamgruppenhaltigen Monomeren mit einer polymerisierbaren Doppelbindung und/oder

$a_{23}$) einer $\alpha,\beta$-ungesättigten Dicarbonylverbindung und

$a_3$) 0 bis 20 Gew.-%, bezogen auf A, eines weiteren, nicht vinylaromatischen Comonomeren, das unter den Herstellungsbedingungen mit $a_1$ reagieren kann, und

B) 3 bis 97 Gew.-Teile, bezogen auf die Summe der Komponenten A und B, eines thermoplastischen Copolymerisates, hergestellt in der Schmelze aus

$b_1$) 80 bis 99,95 Gew.%, bezogen auf B, eines acryl-und phenylgruppenhaltigen Basispolymeren und

$b_2$) 0,05 bis 20 Gew.%, bezogen auf B, mindestens eines ethylenisch ungesättigten Monomeren mit einer Epoxid-und/oder Hydroxylgruppe oder eines Gemisches dieser Monomeren, wobei die Summe der Komponenten aus A und B 100 Gew.-Teile ergibt.

Thermoplastische Formmassen, die Styrolpolymerisate und Polyphenylenether (PPE) enthalten, sind z.B. aus den US-Patentschriften 3 383 435, 4 128 602 sowie 4 128 603 bekannt. Solche Formmassen eignen sich zur Herstellung von Formteilen, die eine bessere Wärmeformbeständigkeit haben als solche Formteile, die kein Polyphenylenether enthalten.

Es ist in der US-Patentschrift 4 360 618 vorgeschlagen worden, Styrolpolymerisate, die 2 bis 8 Gew.% Acrylnitril einpolymerisiert enthalten, zur Herstellung von Formteilen zu verwenden. Es zeigte sich jedoch, daß schon bei höheren Acrylnitrilgehalten, die über 8,5 Gew.% liegen, eine Unverträglichkeit mit dem Polyphenylenether (PPE) auftritt, so daß Formkörper mit schlechten mechanischen Werten aus derartigen Mischungen erhalten werden. Formmassen, die PPE und Styrolacrylnitrilcopolymerisate mit höheren Gehalten an Acrylnitril (SAN), die gegebenenfalls schlagzäh modifiziert sind, haben sich daher bislang nicht eingeführt.

In der US-Patentschrift 4 387 189 werden Copolymerisate aus Styrol und Säure-, Säureanhydrid-oder Säurechlorid-Comonomeren, die gegebenenfalls Acrylnitril enthalten können, mit PPE umgesetzt. Nachteilig ist die nichtausreichende mechanische Stabilität der Formkörper, besonders wenn die Copolymeren Acrylnitril enthalten, was vermutlich in der geringen Reaktivität der Comonomeren zum PPE bei Anwesenheit von Acrylnitril begründet ist. Dies gilt insbesondere dann, wenn das Copolymere durch gepfropfte Butadien-oder Acrylatkautschuke schlagzäh modifiziert ist.

In den EP-B 156 990, EP-A 170 946 und EP-A 200 185 werden spezielle Pfropfcopolymerisate, die aus PPE und Styrolacrylnitril-Copolymerisaten mit besonderen Monomerbausteinen unter Zuhilfenahme spezieller Kopplungsmittel erhalten wurden, mit verbesserten mechanischen Eigenschaften beschrieben.

Ungünstig sind dabei jedoch die noch nicht befriedigenden mechanischen Eigenschaften der Formmassen und der daraus hergestellten Formteile bzw. die technisch aufwendige Produktion der Formmassen über die Herstellung der speziellen Copolymerisate und die anschließende Kopplungsreaktion in organischen Lösungsmitteln.

Die Flammfestausrüstung von thermoplastischen Kunststoffen ist aus Vogel, "Flammfestmachen von Kunststoffen", Hüthig-Verlag, Heidelberg (1966), Seiten 94 bis 102, Troitzsch, "Brandverhalten von Kunststoffen", Hanser-Verlag, München (1982), Seiten 1 bis 65, Hirschler, "Developments in Polymer Stabilization", Band 5, Editor G. Scott, Applied Science Publishers, London (1982), Seiten 107 bis 151 bekannt. Bei Anwendung verhältnismäßig großer Mengen an Halogen enthaltenden Flammschutzmitteln und unter gleichzeitiger Anwendung von Synergisten, tropfen Thermoplaste nach dem Beflammen mit einer heißen Flamme nichtbrennend ab und verlöschen von selbst. Dieser Effekt des Selbstverlöschens tritt ohne die Anwendung eines Synergisten erst nach Zugabe einer weitaus größeren Menge an Halogen enthaltenden Flammschutzmitteln ein. So ausgerüstete Formmassen zeigen Nachteile, die vom Verarbeiter meist nicht toleriert werden. Charakteristisch sind z.B. die Verfärbung der Formmassen sowie die Korrosion von

Verarbeitungsmaschinen.

Ohne Verwendung von Synergisten muß die Flammschutzmittelmenge erhöht werden, was zu einer starken Beeinträchtigung der damit ausgerüsteten Thermoplaste und aufgrund einer deutlichen Absenkung der Wärmeformbeständigkeit zu brennendem Abtropfen führt. Diese Probleme können mithin nur durch eine Senkung der Menge an halogenhaltigen Flammschutzmitteln gelöst werden. Häufig erreichen die Thermoplaste dann jedoch nicht mehr die Einstufung UL 94 V0 oder UL 94 V1.

Außer der vorstehend angeführten Möglichkeit, thermoplastische Kunststoffe mit Halogen enthaltenden Flammschutzmitteln auszurüsten, gibt es auch die Möglichkeit eines halogenfreien Flammschutzes. So sind aus der DE-A 3 432 749, der DE-A 3 432 750 und der DE-A 3 526 549 selbstverlöschende, halogenfreie Formmassen auf Basis von PPE und Styrol-Acrylnitrilpolymerisaten bekannt. Ungünstig sind dabei jedoch die noch nicht befriedigenden mechanischen Eigenschaften der Formmassen und der daraus hergestellten Formteile bzw. die technisch aufwendige Produktion der Formmassen über die Herstellung der speziellen Copolymerisate und die anschließende Kopplungsreaktion in organischen Lösungsmitteln.

Der vorliegenden Erfindung lag daher die Aufgabe zugrunde, auf Basis von Polyphenylenether thermoplastische Formmassen bereitzustellen, die die geschilderten Nachteile vermeiden, einfach herzustellen sind und zu Formkörpern mit guten mechanischen Eigenschaften verarbeitet werden können.

Diese Aufgabe wurde erfindungsgemäß gelöst durch die eingangs definierten thermoplastischen Formmassen.

Außerdem wurden spezielle Ausgestaltungen der Formmassen gemäß der Unteransprüche und ein Verfahren zu ihrer Herstellung gefunden.

Im folgenden werden die Formmassen im einzelnen beschrieben.

Es versteht sich dabei von selbst, daß für selbstverlöschende halogenfreie thermoplastische Formmassen nur solche Komponenten in Frage kommen, die ihrerseits bis auf Spuren frei von Halogen sind.

Als Komponente A enthalten die erfindungsgemäßen Formmassen 3 bis 97, vorzugsweise 10 bis 90, insbesondere 35 bis 90 Gew.-Teile, bezogen auf 100 Gew.-Teile der Summe der Komponenten A und B, mindestens eines modifizierten Polyphenylenethers, der unter Verwendung der Komponenten $a_1$, $a_2$ und gegebenenfalls $a_3$ hergestellt wird. Bei halogenfreien, selbstverlöschenden Formmassen hat es sich als vorteilhaft erwiesen, größere Mengen von A, nämlich 45 bis 90 Gew.-Teile, gezogen auf die Summe von A und B, zu verwenden. Unter "modifiziert" soll dabei eine durch die Umsetzung der Komponenten $a_1$, $a_2$ bzw. $a_3$ hervorgerufene Veränderung der Komponente $a_1$ verstanden werden.

Bei der Komponente $a_1$ handelt es sich um einen Polymeranteil, der mindestens 30, bevorzugt mehr als 50, insbesondere mehr als 60 Gew.%, bezogen auf $a_1$, Polyphenylenether und höchstens 70, bevorzugt weniger als 50, insbesondere weniger als 40 Gew.%, bezogen auf $a_1$, eines vinylaromatischen Polymeren enthält. Für halogenfreie, selbstverlöschende Formmassen ist es insbesondere von Vorteil, mehr als 90 Gew.-% PPE und weniger als 10 Gew.-%, jeweils bezogen auf $a_1$, des vinylaromatischen Polymeren zu verwenden.

Die in Frage kommenden Polyphenylenether sind an sich bekannt, sie werden nach üblichen Verfahren aus in ortho-Position durch Alkylgruppen, Alkoxygruppen, bei halogenhaltigen Formmassen auch durch Chlor oder Brom disubstituierten Phenolen, durch oxidative Kopplung hergestellt (vgl. US-Patent 3 661 848, 3 378 505, 3 306 874, 3 306 875 und 3 639 656). Die Alkyl-oder Alkoxygruppen, die bevorzugt 1 bis 4 C-Atome, aber kein $\alpha$-ständiges tertiäres Wasserstoffatom enthalten, können bei halogenhaltigen Formmassen auch ihrerseits durch Chlor oder Brom substituiert sein. Geeignete Polyphenylenether sind beispielsweise Poly-2,6-diethyl-1,4-phenylenether, Poly-2-methyl-6-ethyl-1,4-phenylenether, Poly-2-methyl-6-propyl-1,4-phenylenether, Poly-2,6-dipropyl-1,4-phenylenether, Poly-2-ethyl-6-propyl-1,4-phenylenether, bei halogenhaltigen Formmassen auch Poly-2,6-dichlor-1,4-phenylenether und Poly-2,6-dibrom-1,4-phenylenether, oder Copolymere, wie solche, die 2,3,6-Trimethylphenol enthalten, außerdem Polymermischungen. Bevorzugt ist Poly-2,6-dimethyl-1,4-phenylenether. Die in einem solchen Verfahren hergestellten Polyphenylenether weisen im allgemeinen eine relative Viskosität von 0,3 bis 0,8 dl/g, gemessen in 1-gew.-%iger Lösung in Chloroform bei 30°C auf.

Das vinylaromatische Polymere ist vorzugsweise mit dem eingesetzten Polyphenylenether verträglich, d.h. ganz oder weitgehend in diesen Polymeren löslich (vgl. A. Noshay, Block Copolymers, S. 8 bis 10, Academic Press, 1977 und O. Olabisi, Polymer-Polymer Miscibility, 1979, S. 117 bis 189).

Die vinylaromatischen Polymeren weisen im allgemeinen einen Schmelzindex (MFI (200°C/5 kg), gemessen nach DIN 53 735) von 1 bis 30, insbesondere von 15 bis 25 g/10 min auf.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, $\alpha$-Methylstyrol oder p-Methylstyrol genannt; in untergeordneten Anteilen (vorzugsweise nicht mehr als 20, insbesondere nicht mehr als 8 Gew.%, bezogen auf die

Polymeren), können auch Comonomere wie (Meth)acrylnitril oder (Meth)acrylsäureester im Aufbau beteiligt sein. Ein besonders bevorzugtes vinylaromatisches Polymeres ist Polystyrol. Es versteht sich, daß auch Mischungen dieser Polymeren eingesetzt werden können.

Verfahren zur Herstellung solcher vinylaromatischer Polymerer sind an sich bekannt und in der Literatur beschrieben, so daß sich hier nähere Angaben erübrigen. Nur beispielsweise seien hier als geeignete Polymerisationsverfahren die Masse-, Suspensions-, Emulsions-oder Lösungspolymerisation erwähnt.

Der Anteil der Komponente $a_1$ an der Komponente A liegt im Bereich von 70 bis 99,95, vorzugsweise 82 bis 99,9 und insbesondere 85 bis 99,8, speziell 95 bis 99,8 Gew.%, bezogen auf A.

Als wesentliche Komponente $a_2$ enthält der modifizierte Polyphenylenether A mindestens eine der Verbindungen $a_{21}$ bis $a_{23}$. Prinzipiell können auch Mischungen verschiedener Verbindungen $a_{21}$ bis $a_{23}$ eingesetzt werden, doch ist im allgemeinen die Verwendung nur einer dieser Verbindungsarten vorteilhaft. Bevorzugt wird die Komponente $a_{23}$ eingesetzt.

Der Anteil der Komponente $a_2$ beträgt 0,05 bis 10, vorzugsweise 0,1 bis 8, insbesondere 0,2 bis 5 Gew.%, bezogen auf die Komponente A.

Als Komponente $a_2$ sind mindestens eine Amidgruppe enthaltende Monomere mit mindestens einer polymerisierbaren Doppelbindung ($a_{21}$) geeignet, vorzugsweise solche der allgemeinen Formeln I oder II

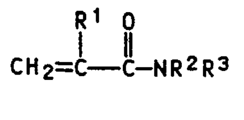

(I)

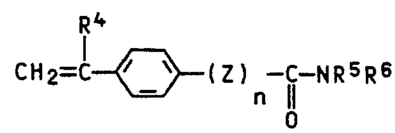

(II) ,

wobei $R^1$, $R^2$, $R^3$, $R^4$, $R^5$ und $R^6$ Wasserstoff, Alkyl-oder Cycloalkylgruppen mit bis zu 12 C-Atomen oder Arylgruppen und Z Alkylengruppen mit 1 bis 12 C-Atomen und $R^1$ und $R^4$ zusätzlich Alkoxygruppen mit bis zu 12 C-Atomen darstellen und n den Wert 0 oder 1, vorzugsweise 0 hat.

Bevorzugte Substituenten $R^1$, $R^2$, $R^3$, $R^4$, $R^5$ und $R^6$ sind Wasserstoff, Alkylgruppen mit 1 bis 10 C-Atomen, Cycloalkylgruppen mit bis zu 8 C-Atomen oder Arylgruppen, vorzugsweise Phenyl. $R^1$ und $R^4$ sind insbesondere H oder Methyl.

Beispielhaft seien hier Acrylamid, N-Methyl-, N-Ethyl-, N-Propyl-, N-Butyl-, N-Pentyl-, N-Hexyl-, N-Heptyl-, N-Octyl-, N-Nonyl-, N-(2-ethylhexyl)-acrylamid, N-Cyclohexylacrylamid, N-Phenylacrylamid, die entsprechenden N,N-Derivate wie N,N-Dimethylacrylamid und die entsprechenden Methacrylamide sowie deren Mischungen genannt. Bevorzugt werden Acrylamid, Methacrylamid, N-Phenylacrylamid und N-Phenylmethacrylamid verwendet.

Als Komponente $a_2$ kann auch ein mindestens eine Lactam-Gruppe enthaltendes Monomer mit einer polymerisierbaren Doppelbindung ($a_{22}$) eingesetzt werden. Vorzugsweise werden Lactame der allgemeinen Struktur III

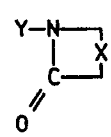

(III)

eingesetzt, wobei X eine lineare verzweigte Alkylengruppe mit 2 bis 15 C-Atomen darstellt und Y die allgemeinen Formel

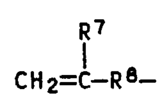

hat,

wobei $R^7$ ein Wasserstoffatom, eine Alkyl-oder Alkoxygruppe mit 1 bis 4 C-Atomen und $R^8$ einen zweibindigen Substituenten

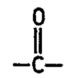

,

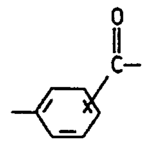

oder

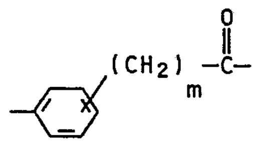

,

wobei m eine ganze Zahl von 1 bis 4 ist, darstellen.

Bevorzugte Substituenten Y sind ganz allgemein Vinyl-, Acryloyl-, Methacryloyl-oder Reste mit Styrol-Grundstrukturen, insbesondere der Acryloyl-und Methacryloylrest.

Bevorzugt sind Lactameinheiten, die zu Polyamiden polymerisierbar oder copolymerisierbar sind, wie dies in Houben-Weyl, Methoden der organ. Chemie, Band XI/2, S. 511 bis 587, (1958) und Band XIV/2, S. 111 bis 131, (1963) beschrieben wird. Beispielsweise seien $\beta$-Propiolactame wie 3,3'-Dimethyl-3-propiolactam, genannt. Ebenfalls bevorzugte Lactam-Einheiten sind Pyrrolidon und $\epsilon$-Caprolactam, außerdem 7-Önantholactam, 8-Capryllactam und 12-Laurinlactam, wie sie bei K. Dachs, Angewandte Chemie, 74, 540 bis 545, (1962) beschrieben werden. Es können auch Mischungen dieser Verbindungen eingesetzt werden.

Als besonders bevorzugtes Beispiel einer Komponente $a_{22}$ sei hier nur N-(Meth)acryloyl-$\epsilon$-caprolactam

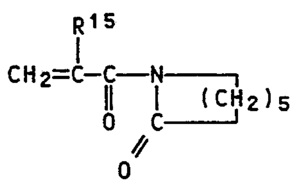

genannt,
wobei $R^{15}$ ein Wasserstoffatom oder eine Methylgruppe sein kann.

Bei der Komponente $a_{23}$ handelt es sich um $\alpha,\beta$-ungesättigte Dicarbonylverbindungen, bevorzugt solche der allgemeinen Formel IV

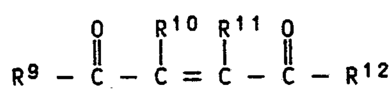

IV,

wobei
$R^9$ und $R^{12}$ Hydroxylgruppen, Aroxy-, Alkoxy-, Aralkoxy-oder Cycloalkoxygruppen mit bis zu 12 C-Atomen, $-NR^{13}R^{14}$ oder gemeinsam -O-oder $-NR^{13}-$,
$R^{10}$ und $R^{11}$ Wasserstoff oder, wenn $R^{10}$ oder $R^{11}$ Wasserstoff ist, eine Alkyl-oder Cycloalkylgruppe mit bis zu 12 C-Atomen, eine Arylgruppe oder bei halogenhaltigen Formmassen auch Chlor, oder gemeinsam eine Alkylengruppe mit 4 C-Atomen,
$R^{13}$ und $R^{14}$ Wasserstoff, Alkyl-, Cycloalkyl-, Aralkyl-oder Arylgruppen mit bis zu 12 C-Atomen, die ihrerseits durch $C_1$-$C_4$-Alkyl-oder -Alkoxygruppen substituiert sein können, darstellen.

Die Substituenten müssen, was sich allerdings von selbst versteht, so beschaffen sein, daß sie die Modifizierungsreaktion nicht verhindern. Es handelt sich daher im allgemeinen um $\alpha,\beta$-ungesättigte Dicarbonsäuren, deren Anhydride, Imide, um Monoester oder Monoamide dieser Dicarbonsäuren, ihre Diester oder Diamide.

Als Beispiele für Dicarbonsäuren seien Maleinsäure, Fumarsäure, Methylmaleinsäure, Butenylbernsteinsäure, Tetrahydrophthalsäure und bei halogenhaltigen Formmassen auch Chlormaleinsäure genannt, von denen Maleinsäure und Fumarsäure besonders bevorzugt werden.

Als Anhydride seien beispielhaft erwähnt Maleinsäureanhydrid, Methylmaleinsäureanhydrid und bei halogenhaltigen Formmassen auch Chlormaleinsäureanhydrid.

Bevorzugte Imide leiten sich von der Maleinsäure ab. Die Substituenten $R^{10}$, $R^{11}$ und $R^{13}$ sind dabei Alkylgruppen mit 1 bis 4 C-Atomen, beispielsweise Methyl-, Ethyl-oder n-, i-oder t-Butyl, Cycloakylgruppen mit bis zu 8 C-Atomen oder Phenylgruppen, die im Falle von $R^{13}$ durch $C_1$-$C_4$-Alkylgruppen substituiert sein können. Nur beispielhaft seien als Maleinimide N-Methylmaleinimid, N-Butylmaleinimid, N-Cyclohexylmaleinimid, N-Phenylmaleinimid, N-(p-Methylphenyl)maleinimid, N-(3,5-Dimethylphenyl)maleinimid, N-Benzylmaleinimid, N-(1-Naphthyl)maleinimid oder deren Mischungen genannt. Von diesen wird N-Phenylmaleinimid besonders bevorzugt.

Bevorzugte Halbester und Halbamide leiten sich von der Maleinsäure ab.

Die Halbester leiten sich bevorzugt von primären und sekundären Monoalkoholen, wie Methanol, Ethanol, n-und i-Propanol, n-und i-Butanol, Pentanole, Hexanole, Heptanole, Octanole, z.B. 2-Ethylhexylalkohol und von höheren Alkoholen wie Dodecanolen und cycloaliphatischen Alkoholen, z.B. Cyclohexanol ab. Weiter eignen sich auch Alkohole mit aromatischen Struktureinheiten wie z.B. Benzylalkohol. Bevorzugt werden jedoch Alkanole mit 1 bis 6 C-Atomen. Als Amine zur Herstellung der erfindungsgemäß eingesetzten Halbamide seien ganz allgemein sekundäre Amine und N-Alkylaniline genannt. Beispiele hierfür sind N-Methyl-oder N-Ethylalkylamine oder N-Methylanilin. Ganz allgemein werden Halbester den Halbamiden vorgezogen.

Formmassen, die als Komponente $a_{23}$) einen Halbester oder ein Halbamid der Maleinsäure enthalten, weisen häufig besonders gute Fließeigenschaften, d.h. besonders hohe Schmelzindex-Werte (MFI) auf.

Als $a_3$ kommen weitere nicht vinylaromatische Comonomere in Frage, die unter den Herstellungsbedingungen mit der Komponente $a_1$ reagieren bzw. auf diese aufpfropfen. Beispielsweise seien hier Acrylsäure, Methacrylsäure, Acrylate, Methacrylate genannt, um nur einige aufzuführen. Der Anteil der Komponente $a_3$ beträgt 0 bis 20, vorzugsweise 0 bis 10 Gew.-%, bezogen auf die Komponente A. Bevorzugt werden jedoch Formmassen, bei deren Herstellung keine dieser weiteren Comonomeren verwendet wurden.

Bei der Herstellung der modifizierten Polyphenylenether A können Radikalstarter eingesetzt werden, und zwar bis zu der Menge, in der $a_2$ eingesetzt wird.

Der Anteil der Radikalstarter ist in der Regel geringer als die Summe der verwendeten monomeren Verbindungen $a_2$. Im allgemeinen handelt es sich dabei um ein organisches Peroxid oder eine Azo-Verbindung. Verwendet werden können organische Peroxide mit einer Halbwertzeit im Bereich von 0,1 bis 3000 s bei 200°C. Die Wahl des Radikalstarters richtet sich nach der gewünschten Reaktionstemperatur. Beispielsweise seien als Radikalstarter tert.-Butylperoxid und Dicumylperoxid genannt.

Häufig, insbesondere bei Temperaturen über 265°C, hat es sich als vorteilhaft erwiesen, ohne Zugabe von Radikalstartern, d.h. in Abwesenheit oder praktischer Abwesenheit von Radikalstartern zu arbeiten. Dies gilt insbesondere dann, wenn als Komponente $a_2$ Fumarsäure eingesetzt wird, da hier bei der Verwendung von Radikalstartern unter Umständen unerwünschte Nebenreaktionen auftreten können.

Zur Herstellung des modifizierten Polyphenylenethers A können die eingesetzten Komponenten in der Schmelze bei 250 bis 350°C, vorzugsweise 265 bis 295°C, miteinander umgesetzt werden. Hierzu eignen sich besonders Extruder, da in diesen im allgemeinen auch eine gute Durchmischung der Komponenten erzielt wird. Die Verweilzeiten liegen im allgemeinen im Bereich von 0,5 bis 30 min., vorzugsweise von 1 bis 5 min. Besonders gut eignen sich Zweischneckenextruder.

Die Komponenten werden vorzugsweise gemeinsam eindosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit nachgeschaltetem rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert und das Granulat wird zur Herstellung der erfindungsgemäßen Formmassen eingesetzt.

Prinzipiell ist die Herstellung des modifizierten Polyphenylenethers auch in jedem Reaktionsgefäß, welches eine Reaktion der Komponenten miteinander ermöglicht, durchführbar.

Als Komponente B enthalten die erfindungsgemäßen Formmassen 3 bis 97, vorzugsweise 10 bis 90, insbesondere 10 bis 65 Gew.-Teile, bezogen auf die Summe der Komponenten A und B, eines thermoplastischen Copolymerisates B. Bei halogenfreien, selbstverlöschenden Formmassen ist es insbesondere von Vorteil, geringere Menge von B, nämlich 10 bis 55 Gew.-Teile, bezogen auf die Summe von A und B, zu verwenden.

B ist das Produkt der Umsetzung von 80 bis 99,95, bevorzugt 90 bis 99,9, insbesondere 95 bis 99,8 Gew.%, bezogen auf die Komponente B, des Basispolymeren $b_1$ mit 0,05 bis 20, bevorzugt 0,1 bis 10, insbesondere 0,2 bis 5 Gew.%, bezogen auf die Komponente B, des Monomeren $b_2$ in der Schmelze.

Unter dem acryl-und phenylgruppen-haltigen Basispolymeren $b_1$ im Sinne dieser Erfindung wird einmal das Polymerisat selbst, hergestellt in Gegenwart bzw. in Abwesenheit eines Butadien-und/oder Acrylatkautschuks, daneben auch seine Abmischung mit üblichen Hilfsmitteln verstanden.

Ist das Polymerisat in Gegenwart eines Butadien-und/oder Acrylatkautschukes hergestellt, so handelt es sich überlicherweise um die an sich bekannten ABS-, ASA-, MBS-oder MABS-Polymerisate, wie sie z.B. in Ullmanns Encyklopädie der technischen Chemie, 4. Auflage, Bd. 19, 1980, S. 277 bis 295 beschrieben sind.

In diesem Fall ist $b_1$ im allgemeinen ein Pfropfmischpolymerisat $b_{11}$, das aus 20 bis 70, bevorzugt 40 bis 70, insbesondere 55 bis 65 Gew.%, bezogen auf das Pfropfmischpolymerisat eines Butadien-und/oder Acrylatkautschuks als Pfropfgrundlage und 30 bis 80, bevorzugt 30 bis 60, insbesondere 35 bis 45 Gew.%, bezogen auf das Pfropfmischpolymerisat, eines Copolymerisates als Pfropfhülle besteht. Dieses Copolymerisat wird durch Polymerisation einer Monomermischung in Gegenwart der Pfropfgrundlage erhalten. Die Monomermischung besteht im allgemeinen aus mindestens 50 Gew.%, bezogen auf die Mischung, eines vinylaromaischen Monomeren mit 8 bis 12 C-Atomen, wie $\alpha$-Methylstyrol, para-Methylstyrol, oder insbesondere Styrol selbst und aus einem acrylgruppenhaltigen Monomeren, insbesondere Acrylnitril und/oder Acrylaten oder Methacrylaten mit $C_1$-$C_8$-Alkylresten, wie Methyl(meth)acrylat. Sie enthält bevorzugt 15 bis 40, insbesondere 20 bis 38 Gew.%, bezogen auf die Mischung, der Acrylmonomeren. Sie kann ferner noch bis zu 10 Gew.%, bezogen auf die Mischung, weitere Monomere wie Methacrylamide oder Acrylamide oder Gemische dieser Verbindungen enthalten.

Der an sich bekannte Butadienkautschuk (EP-A 199 334), der die Pfropfgrundlage bilden kann, sollte eine Glastemperatur [nach K.H. Illers und H. Breuer, Kolloid-Zeitschrift 176, (1961) Seite 110] haben, die unter 0°C liegt. Als Kautschuk kommen beispielsweise in Frage: Polybutadien (vgl. DE-A 14 20 775 und DE-A 14 95 089), daneben auch Copolymerisate aus überwiegend Butadien und Styrol mit Comonomeren wie Isopren, Acrylnitril oder Vinylmethylether.

Als Pfropfgrundlage kommt auch ein an sich aus der EP-A 201 763 bekanntes Acrylesterpolymerisat in Frage, dessen Glastemperatur unter 0°C, bevorzugt unter -30°C, liegt. Diese Polymerisate können in der Hauptsache aufgebaut sein aus Alkylacrylaten mit 1 bis 8 C-Atomen im Alkylrest wie n-Butylacrylat oder 2-Ethyl-hexylacrylat, daneben auch aus bis zu 50, insbesondere 10 bis 20 Gew.-%, bezogen auf das Polymerisat, weiterer copolymerisierbarer Monomerer wie Butadien, Isopren, Styrol, Acrylnitril oder Vinylmethylether oder Mischungen davon. Bevorzugt sind diese Acrylesterpolymerisate vernetzt. In diesem Fall enthalten sie 0,1 bis 5, bevorzugt 1 bis 4 Gew.-%, bezogen auf das Polymerisat, eines mehrfunktionellen Monomeren, wie Divinylbenzol oder Di-hydro-di-cyclopentadienylacrylat.

Sowohl die Kautschuke als auch die Pfropfmischpolymerisate werden in bekannter Weise in Emulsion oder Lösung hergestellt, wobei die Pfropfung auch in üblicher Art in mehreren Stufen erfolgen kann. Es entstehen Pfropfmischpolymerisate, bei denen die Pfropfhülle in dem Fachmann bekannten Grenzen auf die elastomere Grundlage gepfropft ist.

Die Teilchengrößen der Pfropfmischpolymerisate können den Erfordernissen entsprechend nach bekannten Methoden bestimmt und eingestellt werden, z.B. bei der Emulsionspolymerisation mit Hilfe eines Saatlatex oder durch einen anschließenden Agglomerationsschritt. Üblicherweise sollte die mittlere Teilchengröße ($d_{50}$-Wert der integralen Massenverteilung, bestimmt nach der in DE-B 24 27 960 beschriebenen Methode) zwischen 0,1 und 1 $\mu$m bei Pfropfmischpolymerisaten, die in bekannter Weise in Emulsion hergestellt wurden, liegen oder zwischen 0,5 und 10 $\mu$m bei Produkten, die in bekannter Weise in Lösung hergestellt wurden.

Ist $b_1$ in Abwesenheit der Kautschuke hergestellt, so handelt es sich um ein Copolymerisat $b_{12}$ aus der Monomermischung, die bereits bei der Pfropfhülle des Pfropfmischpolymerisates $b_{11}$ beschrieben wurde. Diese S/AN/MMA-Copolymerisate sind an sich bekannt und im Handel erhältlich.

Sie können in üblicher Weise in Lösung, Emulsion oder Masse kontinuierlich oder diskontinuierlich hergestellt werden. Sie weisen im allgemeinen Viskositätszahlen zwischen 0,5 und 1,5 dl/g, gemessen bei 25°C in 0,5 %iger Lösung in Dimethylformamid, auf.

$b_1$ kann auch eine Mischung von 40 bis 60, bevorzugt 45 bis 55 Gew.%, bezogen auf $b_1$, des Pfropfmischpolymerisates $b_{11}$ und 40 bis 60, bevorzugt 45 bis 55 Gew.%, bezogen auf $b_1$, des Copolymerisates $b_{12}$ sein.

Daneben kann das Basispolymer $b_1$ bis zu 20 Gew.%, bevorzugt 0 bis 1 Gew.%, bezogen auf $b_1$, übliche Hilfsstoffe enthalten.

Es kommen dabei bekannte Verarbeitungshilfsmittel in den dem Fachmann bekannten Mengen in Betracht, die für die Herstellung von $b_{11}$ bzw. $b_{12}$ üblich sind, z.B. Mineralöle, Silikonöle oder andere Gleit-

und Entformungsmittel. Außerdem kann $b_1$ übliche Modifiziermittel enthalten, z.B. Polymere, Verstärkungs- und Füllstoffe, Stabilisatoren, Gleitmittel, Farbstoffe und Pigmente. Als Verstärkungsmittel können z.B. Glasfasern, Glaskugeln, Kaolin, Quarz, Glimmer, Wollastonit, Talkum, Titandioxid, Aluminiumoxid, Micovit, Kreide oder kalziniertes Aluminiumsilikat eingesetzt werden.

Als $b_2$ ist grundsätzlich jedes ethylenisch ungesättigte Monomere mit einer Epoxid-und/oder Hydroxylgruppe oder ein Gemisch solcher Monomerer geeignet, die unter den Reaktionsbedingungen mit $b_1$ reagieren.

Epoxidhaltige Monomeren enthalten im allgemeinen die Strukturеinheit

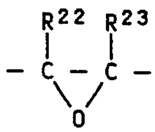 ,

wobei $R^{22}$ und $R^{23}$ Wasserstoff oder $C_1$-$C_{12}$-Alkylgruppen sind.

Vorzugsweise werden Monomere verwendet, die Glycidylgruppen tragen, insbesondere Glycidylacrylat und Glycidylmethacrylat. Es eignen sich auch Glycidylderivate anderer Säuren und Glycidylallyl-und Vinylether.

Daneben können als $b_2$ auch Hydroxylgruppen enthaltende Monomere verwendet werden. Es kann sich dabei um Verbindungen der allgemeinen Formel V

$CH_2=CR^{16}$-K-OH V

handeln, wobei

$R^{16}$ insbesondere Wasserstoff, daneben aber auch $C_1$-$C_{25}$-Alkyl,

K 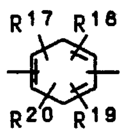 $-(CH_2)_S-$, $-C(=O)-O-L-$,

$-C(=O)-NR^{16}-L-$, daneben auch

$-CH_2-CH(OH)-CH_2-$ oder bei halogenhaltigen Formmassen auch $-CH_2-CH(Cl)-CH_2-$,

$R^{17}$ bis $R^{20}$ Wasserstoff oder Methyl, daneben auch $C_2$-$C_8$-Alkyl, $-NO_2$ oder bei halogenhaltigen Formmassen auch Halogen oder -CN,

S eine ganze Zahl von 0 bis 6, insbesondere 1 bis 2, und

L ein Brückenglied ist.

Als Brückenglied L kommt insbesondere in Frage $C_1$-$C_4$-Alkylen, aber auch $C_5$-$C_{25}$-Alkylen, $C_6$-$C_{12}$-Cycloalkylen,

$-(CH_2)_3-O-[-C(=O)(CH_2)_5-]_k-$ ,

wobei j = 2 bis 10 und k = 1 bis 10 ist,

$-(CH_2-CH_2-O-)_h-CH_2-CH_2-$ ,

$-(CH_2-CH(CH_3)-O-)_h-CH_2-CH(CH_3)-$ oder

$-(CH_2-CH_2-O-)_h-(CH_2-CH(CH_3)-O-)_i-CH_2-C(R^{21})-$ ,

wobei h, i = 1, 2 oder auch 3 bis 20 ist und $R^{21}$ = H oder $CH_3$ ist.

In der Reihe der Hydroxylgruppen enthaltenden Stoffe sind besonders bevorzugte Verbindungen Hydroxyethylacrylat, Hydroxypropylacrylat, Hydroxybutylacrylat, Butandiolmonoacrylat, Vinylbenzylalkohol oder bei halogenhaltigen Formmassen auch 3-Chlor-hydroxypropylacrylat.

Bei der Umsetzung des Basispolymeren $b_1$ mit den Monomeren $b_2$ können bis zu 20 Gew.%, bezogen auf B, an Radikalstartern eingesetzt werden.

Der Anteil der Radikalstarter ist in der Regel geringer als die Summe der verwendeten monomeren Verbindungen $b_2$. Im allgemeinen handelt es sich dabei um ein organisches Peroxid oder eine Azo-Verbindung. Verwendet werden können organische Peroxide mit einer Halbwertzeit im Bereich von 0,1 bis 3000 s bei 200°C. Die Wahl des Radikalstarters richtet sich nach der gewünschten Reaktionstemperatur. Beispielsweise seien als Radikalstarter tert.-Butylperoxid und Dicumylperoxid genannt.

In einer bevorzugten Ausführungsform wird auf die Initiierung der Umsetzungsreaktion durch Zugabe von Radikalstartern verzichtet. Die Umsetzung läuft also bevorzugt in Abwesenheit oder praktischer Abwesenheit von Radikalstartern ab.

Zur Umsetzung werden die verwendeten Komponenten in der Schmelze, also üblicherweise zwischen 120 bis 280°C, insbesondere zwischen 140 bis 240°C, miteinander umgesetzt. Hierzu eignen sich besonders Extruder, da in diesen im allgemeinen auch eine gute Durchmischung der Komponenten erzielt wird. Die mittleren Verweilzeiten liegen im allgemeinen im Bereich von 0,5 bis 30 min., vorzugsweise von 1 bis 5 min. Besonders gut für das erfindungsgemäße Verfahren eignen sich Zweischneckenextruder, der in bekannter Weise mit Knetelementen ausgerüstet sein kann.

Vorteilhaft ist die Verfahrensvariante, die bei der Herstellung der Komponente A besondes bevorzugt wird, so daß sich hier weitere Ausführungen erübrigen.

Zur Flammfestausrüstung können die erfindungsgemäßen Formmassen, wenn sie halogenfrei sind, zusätzlich zu A und B 1 bis 40, insbesondere 5 bis 25, besonders bevorzugt 10 bis 20 Gew.%, bezogen auf die Formmasse, einer Phosphor enthaltenden Verbindung C enthalten.

Es handelt sich dabei um organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A.F. Hollemann und E. Wiberg, Walter de Gruyter und Co. (1964, 57. bis 70. Auflage), Seite 166 bis 177, wiedergegeben ist. Phosphorverbindungen der Wertigkeitsstufen -3 bis +5 leiten sich von Phoshin (-3), Diphosphin (-2), Phosphinoxid (-1), elementarem Phosphor (±0), hypophosphoriger Säure (+1), phosphoriger Säure (+3), Hypodiphosphorsäure (+4) und Phosphorsäure (+5) ab.

Aus der großen Zahl von geeigneten Verbindungen seien nur einige Beispiele erwähnt.

Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin u.a. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a. Besonders geeignet ist Tetranaphthyldiphosphin.

Phosphorverbindungen der Wertigkeitsstufe -1 leiten sich vom Phosphinoxid ab. Beispiele sind Triphenylphosphinoxid, Tritolylphosphinoxid, Trinonylphosphinoxid, Trinaphthylphosphinoxid. Bevorzugt ist Triphenylphosphinoxid.

Phosphor der Wertigkeitsstufe ±0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite. Sie können Salzcharakter haben oder rein organischer Natur sein.

Beispiele sind Calciumhypophosphit und Magnesiumhypophosphit, daneben auch komplexe Hypophosphite oder Doppelhypophosphite, oder organische Hypophosphite wie Cellulosehypophosphitester oder Ester der hypophosphorigen Säuren mit Diolen, wie z.B. von 1,10-Dodecyldiol. Auch substituierte Phosphinsäuren und deren Anhyride, wie z.B. Diphenylphosphinsäure, können eingesetzt werden. Auch Melaminhypophosphit ist geeignet. Des weiteren kommen in Frage Diphenylphosphinsäure, Di-p-Tolylphosphinsäure, Di-Kresylphosphinsäureanhydrid. Es kommen aber auch Verbindungen wie Hydrochinon-, Ethylenglykol-, Propylenglykol-bis-(diphenylphosphinsäure)ester u.a. in Frage. Ferner sind geeignet Aryl(Alkyl)phosphinsäureamide, wie z.B. Diphenylphosphinäsure-dimethylamid und Sulfonamidoaryl(alkyl)-phosphinsäurederivate, wie z.B. p-Tolylsulfonamidodiphenylphosphinsäure. Bevorzugt eingesetzt werden Hydrochinon-und Ethylenglykol-bis-(diphenylphosphinsäure)ester.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten. Ferner ist Phosphor der Wertigkeitsstufe +3 in Triaryl(alkyl)phosphiten, wie z.B. Triphenylphosphit, Tris-(4-decylphenyl)phosphit, Tris(2,4-di-tert.-butylphenyl)phosphit oder Phenyldidecylphosphit u.a. enthalten. Es können aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage.

Besonders bevorzugt werden Methylneopentylphosphonat (Methanphosphonsäuremethylester) und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl-und arylsubstituierte Phosphate in Betracht. Beispiele sind Phenylbisdodecylphosphat, Phenylethylhydrogenphosphat, Phenyl-bis-(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)-phenylphosphat, Phenylmethylhydrogenphosphat, Di(dodecyl)-p-tolylphosphat, p-Tolyl-bis(2,5,5-trimethylhexyl)phosphat, 2-Ethylhexyldiphenylphosphat. Besonders geeignet sind Phosphorverbindungen, bei denen jeder Rest ein Aryloxi-Rest ist. Ganz besonders geeignet ist Triphenylphosphat.

Des weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie es beispielsweise in der DE-A 20 36 173 beschrieben ist. Das Molekulargewicht, gemessen durch Dampfdruckosmometrie in Dimethylformamid, der Polyphospholinoxide soll im Bereich von 500 bis 7.000, vorzugsweise im Bereich von 700 bis 2.000 liegen.

Der Phosphor besitzt hierbei die Oxidationsstufe -1.

Ferner können anorganische Koordinationspolymere von Aryl(Alkyl)-phosphinsäuren, eingesetzt werden. Ihre Herstellung wird in DE-A 31 40 520 angegeben. Der Phosphor besitzt diie Oxidationszahl +1.

Weiterhin können solche halogenfreien polymeren Phosphorverbindungen eingesetzt werden, die durch die Reaktion eines Phosphonsäurechlorids, wie z.B. Phenyl-, Methyl-, Propylphosphonsäuredichlorid mit bifunktionellen Phenolen, wie z.B. Hydrochinon, Resorcin, 2,3,5-Trimethylhydrochinon, Bisphenol-A, Tetramethylbisphenol-A entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi-und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können halogenfreie polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US-PS 4 403 075) hergestellt werden. In Frage kommt aber auch das anorganische Poly(ammoniumphosphat).

Es können auch oligomere Pentaerythritphosphite, -phosphate und -phosphonate gemäß EP-B 8 486, z.B. Mobil Antiblaze® 19 (eingetragenes Warenzeichen der Firma Mobil Oil) verwendet werden.

Ganz besonders bevorzugt zum Einsatz gelangen Triphenylphosphinoxid, Triphenylphosphat, Hydrochinon-bis-(diphenylphosphinsäure)ester und Methylneopentylphosphat (Methanphosphonsäureneopentylester) und Mobil Antiblaze 19.

Zusätzlich können die erfindungsgemäßen Formmassen als Komponente D einen nichtmodifizierten Polyphenylenether enthalten. Dieser entspricht bevorzugt dem in Komponente $a_1$ eingesetzten Polyphenylenether, weshalb hier auf die dortigen Ausführungen zu geeigneten Verbindungen verwiesen wird. Der Anteil der Komponente D kann, falls vorhanden, vom 0,1fachen bis zum 20fachen, bevorzugt bis zum 4fachen, insbesondere bis zum 2fachen der Gewichtsmenge betragen, in der die Komponente A in der erfindungsgemäßen Formmasse vorliegt.

Als weiteren Bestandteil E können die erfindungsgemäßen Formmassen vinylaromatische Polymere enthalten. Geeignet als E sind solche vinylaromatischen Polymere, wie sie bereits in Komponente $a_1$ beschrieben wurden. Für nähere Einzelheiten sei deshalb auf die Ausführungen zur Komponente $a_1$ verwiesen.

Die vinylaromatischen Polymere können auch schlagzäh modifiziert sein. Solche Polymere sind dem Fachmann als schlagzähes Polystyrol (HIPS) bekannt. Dabei werden die vinylaromatischen Polymeren in Gegenwart eines kautschukartigen Polymeren hergestellt. Als kautschukartige Polymere seien beispielsweise Polybutadien-und Polyisopren-Kautschuk genannt.

Die üblicherweise zur Herstellung schlagzähmodifizierter Styrolpolymerisate angewandten Verfahren

sind die Polymerisation in Masse oder Lösung, wie beispielsweise in der US-Patentschrift 2 694 692 beschrieben. Die schlagzäh modifizierten Styrolpolymerisate (HIPS) weisen im allgemeinen einen Schmelzindex (MFI (200°C/5 kg), gemessen nach DIN 53 735) von 2 bis 30, insbesondere von 2,5 bis 20 g/10 min auf.

Der Anteil an E kann vom 0,05fachen bis zum 4,0fachen, bevorzugt bis zum 2,0fachen der Gewichtsmenge der Summe der in der Formmasse vorliegenden Komponenten A und, falls vorhanden, D betragen. Bei halogenfreien, selbstverlöschenden Formmassen ist es insbesondere günstig, geringere Mengen an E, nämlich bis zum 0,5fachen der Gewichtsmenge der Summe der in der Formmasse vorliegenden Komponenten A und, falls vorhanden, D zu verwenden.

Als weiteren Bestandteil können die Formmassen die Komponente F enthalten.

Der Anteil an F in der Formmasse kann vom 0,1fachen bis zum 20fachen, bevorzugt bis zum 4fachen, insbesondere bis zum 1,2fachen der Gewichtsmenge betragen, in der die Komponente B in der erfindungsgemäßen Formmasse vorliegt. Die Komponente F kann das Pfropfmischpolymerisat $b_{11}$, seine Abmischung mit dem Copolymerisat $b_{12}$ im Gewichtsverhältnis $b_{11}$ zu $b_{12}$ wie 40 zu 60 bis 60 zu 40, bevorzugt 45 zu 55 bis 55 zu 45 oder gegebenenfalls das Copolymerisat $b_{12}$ allein sein.

Neben den in den Komponenten B, E und F gegebenenfalls vorhandenen, gepfropften Kautschuken, wie Butadien-, Acrylat-oder Styrolbutadienkautschuk können diese auch ungepfropft als Komponente G zugesetzt werden. Als Kautschuke G seien weiter erwähnt Polybuten-Kautschuk, hydrierter Styrolbutadien-, Acrylnitrilbutadien-, Ethylenpropylen-, Polyisopren-Kautschuk, styrolgepfropfte Ethylenpropylen-Kautschuke, thermoplastische Ethylen-Propylen-Kautschuke, thermoplastische Polyester-Elastomere, Ethylenkautschuke und Ionomere, Styrol-Butadien-Blockcopolymere einschließlich AB-, ABA-, ABA-verschmiert-(taper)-, ABAB-, ABAB-verschmierte Block-Copolymere, Stern-Block-Copolymere und ähnliche, analoge Isopren-Blockpolymerisate und insbesondere (teil)hydrierte Blockcopolymere. Die Komponente G kann in Mengen bis 40, vorzugsweise 1 bis 30 Gew.-Teile, bezogen auf 100 Gew.-Teile der Summe der Komponenten A und B, in den erfindungsgemäßen Formmassen vorhanden sein.

Darüber hinaus können die erfindungsgemäßen thermoplastischen Formmassen auch übliche Zusatzstoffe und Verarbeitungshilfsmittel enthalten. Der Anteil dieser Zusätze beträgt im allgemeinen nicht mehr als 40, insbesondere nicht mehr als 20 Gew.-Teile, bezogen auf 100 Gew.-Teile der Summe aus A und B.

Als Zusatzstoffe seien genannt übliche Hitze-und Lichtstabilisatoren, Gleit-und Entformungsmittel, Färbemittel, wie Farbstoffe und Pigmente in üblichen Mengen. Weitere Zusatzstoffe sind Verstärkungsmittel wie Glasfasern, Kohlenstoff-Fasern, aromatische Polyamidfasern und/oder Füllstoffe,. Gipsfasern, synthetische Calciumsilikate, Kaolin, calciniertes Kaolin, Wollastonit, Talkum, Kreide, ferner bei halogenhaltigen Formmassen Flammschutzmittel z.B. bromierte oder chlorierte organische Verbindungen, gegebenenfalls in Mischung mit Antimon-Verbindungen.

Die Herstellung der erfindungsgemäßen thermoplastischen Formmassen erfolgt zweckmäßigerweise durch Mischen der Komponenten bei Temperaturen im Bereich von 200 bis 320°C, vorzugsweise 250 bis 300°C in üblichen Mischvorrichtungen, wie z.B. Knetern, Banburymischern und Einschneckenextrudern, vorzugsweise in einem Zweischneckenextruder. Um eine möglichst homogene Formmasse zu erhalten, ist eine intensive Durchmischung notwendig, was in bekannter Weise erreicht werden kann. Die mittleren Verweilzeiten beim Mischen liegen im Bereich von 0,5 bis 30 min., vorzugsweise von 1 bis 5 min. Die Reihenfolge des Mischens der Komponenten kann variiert werden, es können zwei oder gegebenenfalls drei Komponenten vorgemischt sein oder es können auch alle Komponenten gemeinsam gemischt werden.

Bei der Herstellung der Formmassen können einzelne Komponenten miteinander reagieren, so daß im Endprodukt keine reine Mischung der Komponenten mehr vorliegt.

Dieses wird insbesondere dann angestrebt, durch z.B. Mischen bei erhöhter Temperatur über 250°C, wenn eine besonders gute Anbindung von Komponenten untereinander erforderlich ist.

Aus den erfindungsgemäßen Formmassen lassen sich durch Spritzgießen oder Extrusion Formkörper mit vorteilhaften Eigenschaften herstellen.

Unter einer selbstverlöschenden Formmasse im Sinne dieser Erfindung wird eine flammfest ausgerüstete Formmasse verstanden, die in die im folgenden beschriebenen Brandklassen UL 94 V0, V1 oder 5V eingeordnet werden kann.

Die erfindungsgemäßen thermoplastischen Formmassen zeichnen sich durch eine gute Verarbeitbarkeit und Wärmeformbeständigkeit aus. Weitere Vorteile liegen in den guten mechanischen Eigenschaften der Formmasse und der daraus hergestellten Formkörper, daneben auch in deren Oberflächenglanz.

Die in den Beispielen und Vergleichsversuchen erwähnten Tests wurden wie folgt durchgeführt:

1. Die Flammschutzprüfung erfolgt im vertikalen Brandtest nach den Vorschriften der Unterwriter Laboratories zwecks Einordnung in eine der Brandklassen UL 94 V0, V1, V2 oder 5V.

Die Einstufung eines flammgeschützten Thermoplasten in die Brandklasse UL 94 V0 erfolgt, wenn folgende Kriterien erfüllt sind: Bei einem Satz von 5 Proben der Abmessungen 127×12,7×3,16 mm dürfen alle Proben nach zweimaliger Beflammung von 10 s Zeitdauer mit einer offenen Flamme (Höhe 19 mm) nicht länger als 10 s nachbrennen. Die Summe der Nachbrennzeiten bei 10 Beflammungen von 5 Proben darf nicht größer sein als 50 s. Es darf kein brennendes Abtropfen, vollständiges Abbrennen oder ein Nachglühen von länger als 30 s erfolgen. Die Einstufung in die Brandklasse UL 94 V1 erfordert, daß die Nachbrennzeiten nicht länger als 30 s sind und daß die Summe der Nachbrennzeiten von 10 Beflammungen von 5 Proben nicht größer als 250 s ist. Das Nachglühen darf nie länger als 60 s dauern. Die übrigen Kriterien sind identisch mit den oben erwähnten. Eine Einstufung in die Brandklasse UL 94 V2 erfolgen dann, wenn es bei Erfüllung der übrigen Kriterien zur Einstufung UL 94 V1 zu brennendem Abtropfen kommt.

Eine Einstufung in die Brandschutzklasse UL 94 5V erfolgen dann, wenn folgende Kriterien erfüllt sind:

Die Nachbrenn-oder Nachglühzeit der Proben darf jeweils nach der letzten Beflammung 60 s nicht überschreiten. Dabei wird jede Probe fünfmal mit einer Flamme von 127 mm Höhe und einem inneren blauen Kegel von 38 mm Höhe 5 s lang beflammt. Zwischen zwei aufeinanderfolgenden Beflammungen liegt jeweils ein Intervall von 5 s. Es darf weder brennendes noch nicht brennendes Abtropfen noch vollständiges Abbrennen eintreten.

2. Die (Kerb)schlagzähigkeiten wurden nach DIN 53 453 gemessen.

Zur Ausführung von Beispielen und Vergleichsversuchen wurden folgende Komponenten verwendet:

Komponente A

9,35 kg Poly-2,6-dimethyl-1,4-phenylenether mit einer relativen Viskosität von 0,61 (gemessen in 1 gew.%iger Lösung in $CHCl_3$ bei 25°C), 0,5 kg Polystyrol (PS 144 C, Schmelzflußindex MFI bei 200°C/5 kg Belastung = 24 g/10 min) und 0,15 kg Maleinsäuremonoethylester wurden in einen Zweischneckenextruder (ZSK 53; Werner 6 Pfleiderer) dosiert, in einem ersten Teil unter Verwendung von Knetelementen bei 280°C aufgeschmolzen, in einem zweiten Teil unter Kneten und Verwendung von Knetelementen bei 280°C umgesetzt und anschließend in einer Entgasungszone bei 280°C durch Anlagen von Vakuum entgast. Die mittlere Verweilzeit im Extruder betrug 3 min. Die austretende Schmelze wurde durch ein Wasserbad geleitet, granuliert und getrocknet.

Komponente B

B(1): 9,8 kg eines Basispolymeren $b_1$(1), bestehend aus einer Mischung aus 4,9 kg eines SAN-Copolymerisates aus 65 Gew.% Styrol und 35 Gew.% Acrylnitril mit einer Viskositätszahl von 0,80 dl/g, gemessen bei 25°C an einer 0,5 prozentigen Lösung in Dimethyl formamid, und 4,9 kg eines Emulsionspfropfmischpolymerisates mit einer mittleren Teilchengröße von 0,5 $\mu$m ($d_{50}$-Wert der integralen Massenverteilung) aus 60 Gew.%, bezogen auf das Emulsionspfropfmischpolymerisat, eines Polybutadiens mit einer Glastemperatur von unter 0°C (Pfropfgrundlage) und 40 Gew.%, bezogen auf das Emulsionspfropfmischpolymerisat, eines Copolymerisates aus 65 Gew.% Styrol und 35 Gew.% Acrylnitril als Pfropfhülle, hergestellt bei 95°C mit anschließender Fällung und Trocknung, wurden mit 0,1 kg Glycidylmethacrylat in einem Zweischneckenextruder der Firma Werner & Pfleiderer dosiert und in einem ersten Teil unter Verwendung von Knetelementen bei 180°C aufgeschmolzen, in einem zweiten Teil unter Kneten und Verwendung von zurückfördernden Knetelementen bei 200°C umgesetzt und anschließend in einer Entgasungszone bei 180°C durch Anlegen von Vakuum entgast. Die mittlere Verweilzeit betrug 4 Min. Die austretende Schmelze wurde durch ein Wasserbad geleitet, granuliert und getrocknet.

B(2): 9,8 kg eines Basispolymeren $b_1$(2), bestehend aus einer Mischung aus 4,9 kg des bei B(1) verwendeten SAN-Copolymerisates und 4,9 kg eines Emulsionspfropfmischpolymerisates mit einem mittleren Teilchendurchmesser von 0,49 $\mu$m ($d_{50}$-Wert der integralen Massenverteilung) aufgebaut aus 60 Gew.%, bezogen auf das Emulsionspfropfmischpolymerisat, eines vernetzten Acrylatkautschukes (98 Gew.% N-Butylacylat und 2 Gew.% Dihydro-di-cyclopentadienylacrylat) als Pfropfgrundlage und 40 Gew.%, bezogen auf das Emulsionspfropfmischpolymerisat, eines Copolymerisates aus 65 Gew.% Styrol und 35 Gew.% Acrylnitril als Pfropfhülle, wurden wie bei B(1) mit 0,1 kg Glycidylmethacrylat umgesetzt.

Komponente C

C(1) Triphenylphosphinoxid
C(2) Triphenylphosphat

Komponente D

Poly-2,6-dimethyl-1,4-phenylenether mit einer relativen Viskosität von 0,61 (gemessen in 1 gew.%iger Lösung in $CHCl_3$ bei 25°C).

Komponente E

Hochschlagzähes Polystyrol (HIPS) mit einem Gehalt von 8 Gew.% Butadien und einem Schmelzindex (200°C/5,0 kg) von 15 g/10 min (Buna®CB NX 529 C, (® = eingetragenes Warenzeichen der Firma Bayer).

Komponente F

F(1) Basispolymer $b_1$(1)
F(2) Basispolymer $b_1$(2)

Komponente G

Styrol-Butadien-Styrol-Dreiblockcopolymer mit einem Styrolgehalt von 30 Gew.-% (Cariflex®TR 1102) (® = eingetragenes Warenzeichen der Fa. Shell), Gewichtsmittel des Molekulargewichts $\overline{M}_w$ = 60 000.

Zu Vergleichszwecken wurden folgende Polymerisate verwendet:

V(1) Es wurde ein dem Basispolymer $b_1$(1) gleiches Polymerisat verwendet, jedoch mit dem Unterschied, daß die Pfropfhülle des Emulsionspfropfmischpolymerisats statt 40 Gew.%, der Styrol/Acrylnitrilmischung 39 Gew.% dieser Mischung und 1 Gew.%, jeweils bezogen auf das Emulsionspfropfmischpolymerisat, Glycidylmethacrylat einpolymerisiert enthält.

V(2) Es wurde ein dem Basispolymer $b_1$(1) gleiches Polymerisat verwendet, mit dem Unterschied, daß das SAN-Copolymerisat statt aus Styrol und Acrylnitril aus 64 Gew.% Styrol, 35 Gew.% Acrylnitril und 1 Gew.% Glycidylmethacrylat besteht.

Die folgenden Polyphenylenether und SAN-Polymere enthaltenden Pfropfpolymerisate wurden gemäß der DE-A 3 432 749 (V(3)) und DE-A 3 526 549 (V(4)) hergestellt.

V(3) 100 g D wurden mit Dimethyldichlorsilan im Toluol unter Verwendung von Tributylamin als Säurefänger umgesetzt. Das Umsetzungsprodukt wurde anschließend zu 100 g eines Styrolacrylanitrilpolymerisates (bestehend aus 72 Gew.% Styrol, 25 % Acrylnitril und 3 Gew.% Hydroxybutylacrylat mit einem $\overline{M}_w$ = 60 000, hergestellt durch kontinuierliche Polymerisation) in Toluol unter Verwendung von Tributylamin als Säurefänger in 20 min. zudosiert. Das Pfropfmischpolymere wurde durch Entfernen des Lösungsmittels erhalten.

V(4) Durch kontinuierliche Copolymerisation von 60 Gew.% Styrol, 35 Gew.% Acrylnitril, 3 Gew.% Chlormethylstyrol und 2 Gew.% p-Chlormethylstyrol wurde unter Zusatz von 60 Gew.-Teilen Ethylbenzol, bezogen auf 100 Gew.-Teile Monomere, bei 140°C und 9 bar bei 6 h Verweilzeit ein Copolymeres mit statistischer Verteilung der Monomeren und mit $\overline{M}_w$ = 39 000 hergestellt. Das Copolymer wurde über einen Extruder entgast und als Granulat gewonnen. 50 g des getrockneten Copolymeren wurde mit 1.000 g Toluol und anschließend mit 50 g D versetzt und auf 90°C erwärmt. Nach Abkühlen auf 30°C fügte man sofort 50 g einer 50 gew.%igen wäßrigen Natronlauge unter starkem Rühren zu. Nach 5 min. fügte man 5 g Tetrabutylammoniumhydrogensulfat zu. Es wurde 4 h bei Raumtemperatur gerührt und in 1 h auf 60°C erwärmt, die Reaktion 1 h bei 60°C gehalten und anschließend 500 g Toluol hinzugefügt. Es wurde wie üblich aufgearbeitet.

Beispiele 1 bis 15 und Vergleichsversuche 1* bis 10*

In der folgenden Tabelle 1 sind Beispiele und Vergleichsversuche von thermoplastischen Formmassen aufgeführt. Die Formmassen wurden durch Aufschmelzen und Mischen der angegebenen Komponenten in den angegebenen Mengen in einem Zweischneckenextruder bei 280°C und einer Verweilzeit von 3 Minuten und anschließendes Granulieren erhalten.

Die Eigenschaften der Formmassen sind in Tabelle 2 zusammengefaßt.

Tabelle 1: Formmassen

| Beispiel | Vergleichsversuch | A | B Art | B Menge | C(1) | C(2) | D | E | F(1) | G | V Art | V Menge |
|---|---|---|---|---|---|---|---|---|---|---|---|---|
| | | | | Komponenten, Mengenangabe in kg | | | | | | | | |
| 1 | | 4,7 | B(1) | 5,5 | | | | | | 0,8 | | |
| | 1* | | | | | | 5,5 | | 4,7 | 0,8 | | |
| | 2* | | | | | | 5,5 | | | 0,8 | V(1) | 4,7 |
| | 3* | | | | | | 5,5 | | | 0,8 | V(2) | 4,7 |
| 2 | | 3,0 | B(1) | 4,5 | | | 1,0 | 0,5 | | 1,0 | | |
| 3 | | 4,0 | B(1) | 3,0 | | | | | 2,0 | 1,0 | | |
| 4 | | 4,0 | B(1) | 5,0 | | | | | | 1,0 | | |
| 5 | | 2,1 | B(1) | 2,6 | | | 1,9 | 0,2 | 2,4 | 0,8 | | |
| 6 | | 6,0 | B(1) | 2,5 | | | | 0,5 | | 1,0 | | |
| 7 | | 4,2 | B(2) | 5,0 | | | | | | 0,8 | | |
| | 4* | | B(2) | 5,0 | | | 4,2 | | | 0,8 | | |
| | 5* | | | | | | 4,2 | | 5,0[1)] | 0,8 | | |
| 8 | | 2,4 | B(2) | 6,7 | | | | 0,2 | | 0,7 | | |
| 9 | | 4,0 | B(1) | 4,0 | | 1,0 | | | | 1,0 | | |
| 10 | | 4,7 | B(1) | 4,1 | | 1,2 | | | | | | |
| | 6* | | | | | 1,2 | 4,7 | | 4,1 | | | |
| | 7* | | | | | 1,2 | 4,0 | | 3,4 | | V(4) | 1,4 |

Tabelle 1: Formmassen Forts.

| Beispiel | Vergleichsversuch | A | B Art | B Menge | C(1) | C(2) | D | E | F(1) | G | V Art | V Menge |
|---|---|---|---|---|---|---|---|---|---|---|---|---|
| | | | | | Komponenten, Mengenangabe in kg | | | | | | | |
| 11 | | 4,6 | B(1) | 4,1 | 1,3 | | | | | | | |
| | 8* | | | | 1,3 | | 4,6 | | 4,1 | | | |
| | 9* | | | | 1,3 | | 3,8 | | 3,3 | | V(3) | 1,6 |
| 12 | | 2,0 | B(1) | 2,0 | 1,0 | | 2,0 | | 2,0 | 1,0 | | |
| 13 | | 3,5 | B(1) | 2,0 | | 1,3 | 2,0 | | | 1,2 | | |
| 14 | | 3,8 | B(2) | 3,8 | | 1,4 | | | | 1,0 | | |
| | 10* | | | | | 1,4 | 3,8 | | 3,8[1)] | 1,0 | | |
| 15 | | 2,0 | B(2) | 2,0 | 1,4 | | 2,1 | | 1,3[1)] | 1,2 | | |

1): F(2) statt F(1)

Tabelle 2: Eigenschaften

| Beispiel | Vergleichsversuch | Brandschutztest UL 94; nicht bestanden: n.b. | Kerbschlagzähigkeit bei $+23^0C$ [$kJ/m^2$] | Schlagzähigkeit [$kJ/m^2$] $+23^0C$ | $-20^0C$ |
|---|---|---|---|---|---|
| 1 | | | 22 | k[1)] | k[1)] |
| | 1* | | 2 | 15 | 3 |
| | 2* | | 6 | k | 20 |
| | 3* | | 5 | k | 45 |
| 2 | | | 14 | k | k |
| 3 | | | 12 | k | k |
| 4 | | | 19 | k | k |
| 5 | | | 10 | k | k |
| 6 | | | 17 | k | k |
| 7 | | | 20 | k | k |
| | 4* | | 14 | k | k |
| | 5* | | 3 | 18 | 2 |
| 8 | | | 16 | k | k |
| 9 | | 5V | 16 | | |
| 10 | | 5V | 10 | | |
| | 6* | n.b. | 2 | | |
| | 7* | V0 | 6 | | |
| 11 | | 5V | 16 | | |
| | 8* | n.b. | 2 | | |
| | 9* | V1 | 6 | | |
| 12 | | V0 | 15 | | |
| 13 | | 5V | 13 | | |
| 14 | | 5V | 13 | | |
| | 10* | n.b. | 1 | | |
| 15 | | V0 | 10 | | |

[1)]: kein Bruch

**Ansprüche**

1. Thermoplastische Formmassen auf Basis von Polyphenylenether, enthaltend als wesentliche Komponenten

A) 3 bis 97 Gew.-Teile, bezogen auf die Summe der Komponenten A und B, eines modifizierten Polyphenylenethers, hergestellt aus

$a_1$) 70 bis 99,95 Gew.-%, bezogen auf A, eines Polymeranteils, der mindestens 30 Gew.-%, bezogen auf $a_1$, Polyphenylenether und höchstens 70 Gew.-%, bezogen auf $a_1$, eines vinylaromatischen Polymeren enthält,

$a_2$) 0,05 bis 10 Gew.-%, bezogen auf A,

$a_{21}$) eines amidgruppenhaltigen Monomeren mit einer polymerisierbaren Doppelbindung,

$a_{22}$) eines lactamgruppenhaltigen Monomeren mit einer polymerisierbaren Doppelbindung und/oder

$a_{23}$) einer $\alpha,\beta$-ungesättigten Dicarbonylverbindung und

$a_3$) 0 bis 20 Gew.-%, bezogen auf A, eines weiteren nicht vinylaromatischen Comonomeren, das unter den Herstellungsbedingungen mit $a_1$ reagieren kann,

und

B) 3 bis 97 Gew.-Teile, bezogen auf die Summe der Komponenten A und B, eines thermoplastischen Copolymerisates, hergestellt in der Schmelze aus

$b_1$) 80 bis 99,95 Gew.%, bezogen auf B, eines acryl-und phenylgruppenhaltigen Basispolymeren und

$b_2$) 0,05 bis 20 Gew.%, bezogen auf B, mindestens eines ethylenisch ungesättigten Monomeren mit einer Epoxid-und/oder Hydroxylgruppe oder eines Gemisches dieser Monomeren,

wobei die Summe der Komponenten aus A und B 100 Gew.-Teile ergibt.

2. Selbstverlöschende thermoplastische Formmassen nach Anspruch 1, dadurch gekennzeichnet, daß sie kein Halogen und zusätzlich 1 bis 40 Gew.%, bezogen auf die Formmasse, einer phosphorenthaltenden Verbindung C enthalten.

3. Thermoplastische Formmassen nach den Ansprüchen 1 bis 2, dadurch gekennzeichnet, daß die Komponente $a_2$· eine Verbindung der allgemeinen Formel I oder II ist

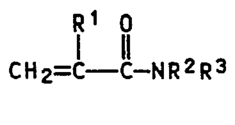

(I)

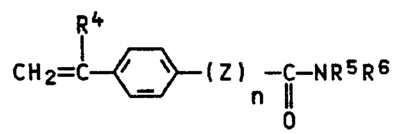

(II),

wobei $R^1$, $R^2$, $R^3$, $R^4$, $R^5$ und $R^6$ Wasserstoff, Alkyl-oder Cycloalkylgruppen mit bis zu 12 C-Atomen oder Arylgruppen und Z Alkylengruppen mit 1 bis 12 C-Atomen und $R^1$ und $R^4$ zusätzlich Alkoxygruppen mit bis zu 12 C-Atomen darstellen und n den Wert 0 oder 1 hat.

4. Thermoplastische Formmassen nach den Ansprüchen 1 bis 3, dadurch gekennzeichnet, daß die Komponente $a_{22}$ eine Verbindung der allgemeinen Formel III ist

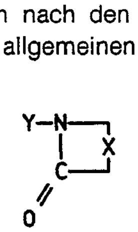

(III),

wobei X eine lineare oder verzweigte Alkylengruppe mit 2 bis 15 C-Atomen darstellt und Y die allgemeine Formel

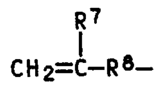

hat,
wobei $R^7$ Wasserstoff, eine Alkyl-oder Alkoxygruppe mit 1 bis 4 C-Atomen und $R^8$ einen der nachstehenden zweiwertigen Reste

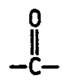

,

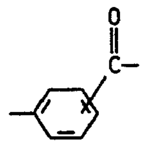

oder

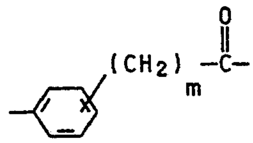

,

wobei m eine ganze Zahl von 1 bis 4 ist, darstellen.

5. Thermoplastische Formmassen nach den Ansprüchen 1 bis 4, dadurch gekennzeichnet, daß die Komponente $a_{23}$ eine Verbindung der allgemeinen Formel IV ist

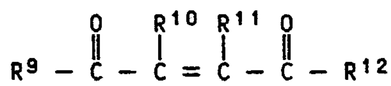

IV ,

wobei
$R^9$ und $R^{12}$ Hydroxylgruppen, Aroxy-, Alkoxy-, Aralkoxy-oder Cycloalkoxygruppen mit bis zu 12 C-Atomen, $-NR^{13}R^{14}$ oder gemeinsam -O-oder $-NR^{13}-$,
$R^{10}$ und $R^{11}$ Wasserstoff oder, wenn $R^{10}$ oder $R^{11}$ Wasserstoff ist, Chlor, eine Alkyl-oder Cycloalkylgruppe mit bis zu 12 C-Atomen oder eine Arylgruppe, oder gemeinsam eine Alkylengruppe mit 4 C-Atomen,
$R^{13}$ und $R^{14}$ Wasserstoff, Alkyl-, Cycloalkyl-, Aralkyl-oder Arylgruppen mit bis zu 12 C-Atomen, die ihrerseits durch $C_1$-$C_4$-Alkyl-oder Alkoxygruppen substituiert sein können, darstellen.

6. Thermoplastische Formmassen nach den Ansprüchen 1 bis 5, dadurch gekennzeichnet, daß das Monomere $b_2$ eine Hydroxylgruppe oder die Struktureinheit

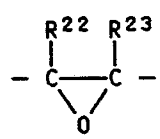

im Molekül enthält, wobei $R^{22}$ und $R^{23}$ Wasserstoff oder $C_1$-$C_{12}$-Alkylgruppen sind.

7. Verfahren zur Herstellung von thermoplastischen Formmassen gemäß den Ansprüchen 1 bis 6 durch Mischen der Komponenten bei einer Temperatur im Bereich von 200 bis 320°C während 0,5 bis 30 Minuten.